# EUROPEAN PATENT APPLICATION

(11) **EP 0 685 258 A1**
(43) Date of publication of application: **06.12.1995**
(21) Application number: 95903925.6
(22) Date of filing: 21.12.1994
(51) Int. Cl.: B01J 20/06, B01J 20/08, B01J 20/10, B01J 20/28, B01D 53/04, B01D 53/56, B01D 53/92

(54) **MATERIAL HAVING SELECTIVE ADSORPTIVITY OF INORGANIC MATERIALS AND PRODUCTION METHOD THEREOF**

(30) Priority: 21.12.1993 JP 322335/93; 21.12.1993 JP 322336/93; 06.06.1994 JP 124000/94; 29.07.1994 JP 178549/94
(71) Applicant: TORAY INDUSTRIES, INC., Tokyo 103 (JP)
(72) Inventor: OGATA, Tomohiko, Otsu-shi, Shiga 520 (JP); KIHARA, Masahiro, Otsu-shi, Shiga 520-32 (JP); UEMURA, Tadahiro, Yamashina-ku, Kyoto-shi, Kyoto 607 (JP); OOTO, Katsufumi, Otsu-shi, Shiga 520 (JP); FURUNO, Shyuji, Yamashina-ku, Kyoto-shi, Kyoto 607 (JP); MURATA, Yukio, Otsu-shi, Shiga 520 (JP)
(74) Representative: Coleiro, Raymond
(86) International application number: JP9402174
(87) International publication number: WO9517246

(57) **Abstract**

The present invention relates to a porous, selectively adsorptive material selected from an Al, Ti or Zr type oxide and having a mean pore diameter of not greater than 5 nm, and a porous, selectively adsorptive material comprising an Si oxide and having a mean pore diameter of 1 to 5 nm. The material of the present invention has particularly excellent selective adsorptivity of Nox in an alumina type material.

## Description

### Technical field

The present invention relates to a specific inorganic material with selective adsorptivity, particularly a material capable of selectively adsorbing low concentration NOₓ contained in combustion exhaust gas or gas mixture, and a production method thereof.

Furthermore, the present invention relates to a NOₓ removal apparatus with a granular, powdery, filmy or honeycomb structure made of an alumina based porous material, to be used for separating a gas mixture or a mixture of liquid compounds different in molecular weight, particularly capable of selectively adsorbing low concentration NOₓ contained in combustion exhaust gas or gas mixture.

### Background technology

Conventional porous materials capable of adsorbing a specific material, particularly NOₓ adsorbents include, as disclosed in JP5-68891A and JP5-146675A, active alumina, in addition to titania, zeolite, etc. These materials are very large in specific surface area and have fine pores, being used to mainly apply their physical capability to adsorb water, NOₓ, SOₓ, etc. on their porous surfaces. However, they are very low in the capability to selectively adsorb NOₓ. These materials have voids among grains, and not the crystal-structural voids as can be seen in glass and zeolite. So they are very wide in the range of pore sizes and about 5 nm in the minimum average pore size, and cannot be used for separating materials as small as thousands in fractional molecular weight or separating a gas mixture.

To obtain a porous film with a fine pore size (especially in a range of angstroms), conventional methods require complicated post-treatment such as acid treatment subsequent to heat treatment or high temperature water vapor treatment subsequent to impregnation with sodium silicate aqueous solution. Furthermore, since most metal alkoxides excluding silicon based alkoxides are too high in hydrolysis rate to obtain fine oxide sols, a simple method of coating with an oxide sol with subsequent heat treatment only cannot present a porous material with fine pores in a range of angstroms.

A well known active alumina production method using the sol-gel method is described in "Ceramic Bulletin", Vol. 54, 1975, No. 3, P. 289-290, American Ceramic Society. However, since the hydrolysis inhibitor was not examined sufficiently, the method cannot produce a transparent sol stably due to variations of conditions, and cannot give homogeneously sized fine grains.

On the other hand, recently known as new NOₓ absorbents are perovskite type compound oxides such as yttrium-strontium-cobalt based compound oxides stated in "Japanese Society of Chemists Journal", 1993, No. 6, P. 703-708, Japanese Society of Chemists, and "Catalysts", Vol. 33, 1991, No. 2, P. 163, Society of Catalysts. These compound oxides have very highly NOₓ selective absorbability and can absorb generally as much as not less than 0.1 mole per 1 mole of the absorbent compound. However, the NOₓ reacts with the water vapor absorbed simultaneously to form nitrites and nitrates for destroying the perovskite structure, and the compound oxides cannot be simply reproduced, hence cannot be reutilized disadvantageously.

The object of the present invention is to solve the above problems, and to present a material which is chemically stable and capable of selectively and reversibly adsorb and desorb a specific material. Especially the object of the present invention is to present an excellent NOₓ adsorbent and a production method thereof for solving the above problems.

Conventional membranes known to be used for separating a gas mixture or a mixture of liquid compounds different in molecular weight include porous membranes of organic high polymers such as cellulose acetate, polyacrylonitrile, polyamide, etc. However, these membranes cannot be used under severe conditions such as high temperature and high pressure, and are disadvantageously liable to be deteriorated in material, depending on the materials to be separated.

In recent years, as separation membranes which can be used under severe conditions to some extent, inorganic porous membranes of glass, zeolite, carbon, etc. are being actively studied. In these inorganic porous membranes, as proposed in JP61-209012A and JP61-192314A, a porous ceramic substrate is coated on the surface with a silica alkoxide solution or suspension, thermally treated, treated by an acid, impregnated with sodium silicate aqueous solution, and treated by high temperature water vapor, to obtain fine pores of less than several nm. However, these inorganic materials are low in strength and not satisfactory in chemical stability.

On the other hand, it is also known that porous membranes prepared by using alumina or zirconia, etc. excellent in heat resistance and corrosion resistance are used as solid-liquid separation filters for ultrafiltration, etc. However, even these ceramic membranes are very wide in the range of pore sizes and are about 5 nm in the minimum average pore size since the voids among grains are used, not being able to separate a material as small as thousands in fractional molecular weight or separate a gas mixture.

Gas separation membranes of inorganic materials are naturally expected to allow gas separation at high temperature since they are high in heat resistance. In this case, for example, to separate water vapor from a gas mixture by pore size regulation, since separation by capillary condensation can be effected up to 200° C, the pore size must be controlled at about 2 nm. However, if the temperature is as high as 400° C or 600° C, the separation of water vapor by the above mechanism cannot be effected since the temperature is higher than the critical temperature of water, and micropore filling mechanism only is expected to allow the separation. In this case, the mechanism requires the pore size to be controlled at less than 1 nm.

For the above physical reasons, the inorganic separation membrane controlled in pore size of the present invention can be used for efficiently separating a condensable gas such as water vapor, carbonic acid gas or nitrogen oxide gas at a high separation factor even at a high temperature exceeding the critical temperature. Especially the object of the present invention is to present an excellent NOₓ separating material, a production method thereof, and a NOₓ removal apparatus, for solving the above problems.

### Disclosure of the invention

Said object of the present invention can be basically achieved by the following constitution.

"A porous selective adsorbable material of 5 nm or less in average pore size, selected from Al-, Ti-, Zr- and Si-based oxides."

Said porous selective adsorbable material, "which has a pore peak size of 0.4 to 0.8 nm."

A method for preparing said porous selective adsorbable material, comprising the step of "sintering a homogeneous mixture with a metal alkoxide and a nitrogen containing compound as essential components."

"A NOₓ (x = 1 ⁻ 2) adsorbable material", comprising the use of said porous selective adsorbable material.

### Brief description of the drawings

Fig. 1 shows the flow of a tunnel denitration system using a material of the present invention.

Fig. 2 shows the pore size (radius) distribution of a material of the present invention.

Fig. 3 shows the result of X-ray diffraction measurement of a material of the present invention.

Fig. 4 shows the result of thermogravimetric analysis of a material of the present invention.

Fig. 5 show molecular weight fraction curves of the materials prepared in Examples 9, 11 and 13 of the present invention.

### Most preferred embodiments of the invention

The present invention allows the pore size (diameter) to be controlled to lower than 5 nm which has been the limit of conventional ceramics, and allows a compound as small as thousands in fractional molecular weight or a gas component to be selectively adsorbed, separated and removed. It is especially to be noted that the selective adsorption of water molecules and NOₓ can be effected.

To allow more NOₓ to be adsorbed, a moderate pore size distribution is required. It was stated before that the average pore size is 0.5 to 5 nm, but for efficient adsorption of water molecules and NOₓ, controlling the pore sizes in a moderate range is necessary. If the pore size is less than 0.5 nm, ordinary molecules are hard to go into the pores since they gather to form clusters. If more than 5 nm, the pores are too large to allow efficient selective adsorption. For these reason, it is preferable that the average pore size is 0.5 to 5 nm.

However, the pore size especially high in the capability to selectively adsorb NOₓ is 1 nm or less, preferably 0.4 to 0.8 nm. In this range, NOₓ can be adsorbed at a high rate even if water molecules coexist.

The pore volume is recommended to be preferably larger, at least 0.1 cc/g or more, more preferably 0.25 cc/g or more. In this range, NOₓ can be practically efficiently adsorbed and desorbed. If conditions are optimized like these, the amount of water adsorbed can be increased up to 10 wt% or more, and the amount of NOₓ adsorbed, up to 5 wt% or more.

Furthermore, the NOₓ adsorbed can be desorbed by heating at 300 to 600° C, but in view of energy efficiency, it is preferable that at least 90% or more of NOₓ is desorbed by heating up to 500° C. It is more preferable that 80% or more of NOₓ is desorbed by heating up to 350° C. The atmosphere for the desorption is recommended to be preferably low in NOₓ partial pressure, and this can be achieved, for example, by reducing the pressure or feeding a carrier gas, etc. The present invention presents a re-usable NOₓ adsorbent which can selectively, efficiently and simply adsorb and desorb the low concentration NOₓ of combustion exhaust gas or gas mixture. In this specification, the word of adsorption is used for the sake of convenience, and in the strict sense, whether the mechanism is adsorption or absorption is not clear, and this mechanism is generally called adsorption in this specification.

The adsorbent with such adsorptivity can be formed into a film, etc. which can be used for selectively separating NOₓ or water vapor, etc.

Furthermore, it is preferable that the material of the present invention is not melted or not changed in form even at a temperature of higher than 700° C or more, preferably 1000° C, considering that it may be exposed to such a high temperature during use or regeneration treatment. Moreover, it is preferable that the material is low in the contents of alkali metal elements such as sodium, lest the ingredients should be dissolved out, and lower than the contents of alkali metals in the porous glass formed by the phase separation method (Vycor, sodium borosilicate glass by the phase separation method).

The production method for the material of the present invention is described below in detail.

### (Production method)

The metal alkoxide used in the present invention is recommended to be preferably any of the compounds represented by the following general formula (A), though not limited to them.

M(-OR₁)ₓ(-OH)_{y} (A)

M stands for Al, Zr, Ti or Si.
x + y = 3 or 4
x > 1
R₁ stands for a substituted or non-substituted aliphatic or alicyclic group with 1 to 6 carbon atoms.

Especially preferable metal alkoxides are alkoxides of such metals as aluminum, zirconium, titanium and silicon, concretely methoxide, ethoxide, propoxide, butoxide, etc. of these metals.

The nitrogen containing compound used in the present invention is recommended to be preferably any of the compounds represented by the following general formula (B), which act also as hydrolysis inhibitors.

NHₓ(-R₂-OH)_{y} (B)

x + y = 3
y > 1
R₂ stands for a substituted or non-substituted aliphatic or alicyclic group with 1 to 6 carbon atoms.

If an ethanolamine, glycol or acetylacetone, etc. is added as a hydrolysis inhibitor for preparing an alkoxide metal mixture, to prepare an alcohol solution, the solution can be homogeneous with the rapid hydrolysis by the water in the air and the alcohol inhibited and with the precipitation of coarse oxide grains prevented. The ethanolamine can be selected from monoethanolamine, diethanolamine and triethanolamine, and the glycol can be selected from ethylene glycol, diethylene glycol, propylene glycol, dipropylene glycol and acetylacetone. The alcohol used as a solvent can be selected from methanol, ethanol, 1-propanol, 2-propanol, 1-butanol, 2-butanol, etc.

The following description refers to the cases of using the compounds represented by said general formulae (A) and (B).

As for the compounds represented by said general formula (A), those of 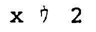
are preferable, and those of x = 3 are especially preferable. Furthermore, the number of carbon atoms of R₁ is recommended to be preferably 3. As for the compounds represented by said general formula (B), those of 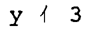
are preferable, and especially those of y = 2 are preferable. However, if the compound A is any metal alkoxide than aluminum alkoxides, those of y = 1 are especially preferable. Furthermore, the number of carbon atoms of R₂ is recommended to be preferably 1 to 3, more preferably 2.

A compound represented by the general formula (A) and a compound represented by the general formula (B) are weighed to use preferably 0.1 to 5.0 moles, more preferably 0.5 to 2.0 moles of the latter for each mole of the former, i.e., to use 0.1 to 2.0 nitrogen atoms for each metal atom, and they are mixed in an inactive gas, to be perfectly dissolved. Then, a lower aliphatic alcohol is used to prepare a solution of preferably 0.01 to 2.0 mole/liter, more preferably 0.1 to 1.0 mole/liter in concentration. The aliphatic alcohol can be selected from methanol, ethanol, propanol, butanol, etc., and among them, ethanol is especially preferable.

The compound B acts to inhibit the hydrolysis of the compound A, and appropriate concentration control allows very finely controlled grains to be obtained. If the amount of the hydrolysis inhibitor is less than 0.1 mole, rapid hydrolysis causes the precipitated grains to cohere and grow, making the solution turbid, and no homogeneous mixture can be obtained. In this case, the homogeneous mixture refers to a transparent or translucent solution or colloidal mixture which is not segregated in natural state. If the amount of the hydrolysis inhibitor is more than 5.0 moles, the effect as a hydrolysis inhibitor is so large as to prevent the precipitation of grains for decades of hours. As for the diluting concentration, if it is less than 0.01 mole/liter, thin film formation efficiency is too low, and more than 2.0 moles/liter, the grains cohere, making it difficult to obtain a thin film with an ideal thickness.

For these reasons, it is more preferable to use 0.5 to 1.0 mole of the compound B for each mole of the compound A and to prepare a solution of 0.1 to 1.0 mole/liter in concentration by using an aliphatic alcohol. The aliphatic alcohol used as the solvent is added for the purpose of forming a thin film, and is not required when a powder is going to be prepared.

In the present invention, it is known that if the amount of the nitrogen containing compound used is too large, the amount of the NOₓ adsorbed by the porous selective adsorbable material tends to be large. The reason is not clarified, but it can be considered that the nitrogen containing compound becomes NOₓ in the step of sintering, and that since NOₓ is desorbed at a relatively high temperature, a structure convenient for allowing NOₓ to be seated remains in the porous structure. Actually, most NOₓ adsorbable materials of the present invention are as very high as about 400° C in NOₓ desorption temperature. As for the amount of nitrogen, the number of nitrogen atoms for each metal atom in the homogeneous mixture is recommended to be preferably 0.1 to 2.0, more preferably 0.25 to 1.0.

To prepare a powder, the aluminum alkoxide solution prepared as above is put into a vessel and allowed to stand in humidity conditioned air as one of the simplest methods. Subsequently the water contained in the air causes hydrolysis to take place, and gelation is completed in one to a few days. As another method, a proper amount of water is poured into the alkoxide solution (alcohol solution : water = 1 : 0.1 ⁻ 10 [by weight]), for causing hydrolysis. In this case, gelation is completed in several minutes to several hours. The gel is dried in a dryer till the volatile matter vanishes apparently, and sintered in a temperature range from 400 to 1000° C for about 10 minutes to 3 hours. The sintering is effected in an oxidizing atmosphere, preferably in air. The final sintering temperature in the step of sintering can select the crystal structure. In the above production method, sintering up to 700° C can present mainly an amorphous structure.

For water vapor absorbability, there is no large difference between a crystalline structure and an amorphous structure. However, for NOₓ adsorptivity, a crystalline structure is more excellent than an amorphous structure.

If the material of the present invention has a crystalline structure, unprecedentedly fine pores can be formed in a desired size range by the voids of fine crystals, and if an amorphous structure, by the voids of a random amorphous structure. For example, conventionally used zeolite can have pores of a limited size range only since the pores are decided by its crystalline structure even though the pores obtained are fine.

The alkoxide solution obtained as above can also be laminated or applied as a coating solution onto the surface of a porous substrate. This is ideal for forming a filmy structure. In this case, the material of the substrate is recommended to be a porous material excellent in heat resistance and corrosion resistance such as any ordinary ceramic material like cordierite, alumina, zirconia, titania, silica or mullite, glass, carbon, metal, etc.

The average pore diameter of the substrate layer is recommended to be in a range from 5 to 100 nm for laminating the surface layer and allowing precipitation inside the pores. If the pore diameter is less than 5 nm, it is too small to allow a desired amount of gas or liquid to permeate, and if more than 100 nm on the contrary, the strength of the substrate is too low disadvantageously. For these reasons, a range from 10 to 80 nm is more desirable.

To control the pore size of the substrate in said range, it is preferable to control the pore size of the raw powder forming the inorganic compound layer. There are methods for sharpening the pore size distribution of the substrate, such as coating with a colloidal suspension, etc., coating with a metal alkoxide solution, or CVD (chemical vapor deposition), etc. If a colloidal suspension is used, a crystal structure can be selected by the final sintering temperature. For example, in the case of aluminum hydrate, h type is obtained at 300° C, g type at 500° C, d type at 800° C, and q type at 900 to 1000° C. If an alkoxide or CVD (chemical vapor deposition) is used, sintering up to 700° C gives an amorphous structure. The surface of the substrate can be either compact and smooth or porous and undulating, but a substrate porous and undulating on the surface is more desirable.

Subsequently, the substrate is coated on the surface with said alkoxide solution. A simple and suitable coating method is to immerse the porous substrate into the coating solution for a certain time and raise it slowly. The coating solution applied onto the surface of the substrate is hydrolyzed in this stage by the water (moisture) contained in air, to form a metal hydroxide gel.

Furthermore, subsequently, the gel is dried and sintered in air to form a strong porous membrane with fine pores on the surface of a porous substrate. By selecting these conditions, a surface layer of 3 nm or less in average pore size can be laminated on the surface of the substrate layer, or the surface layer can be precipitated into the pores of the substrate layer at an apparent average pore size of 3 nm or less. The decisive conditions are mostly the average pore diameter of the substrate layer and the coating method. For example, if a substrate of 10 nm or less in pore size is immersed, lamination is liable to occur, and on the contrary, if a substrate layer of 10 to 100 nm in pore size is immersed, the surface layer is liable to be precipitated into the pores. The above operation may be required only once, depending on the pore size of the porous substrate layer and the surface condition, but repeating several times can present a perfect porous membrane free from cracking and pinholes.

The method of the present invention can freely form an inorganic compound layer (a ceramic porous membrane) of 5.0 nm or less in average pore size, even though depending on the kind and concentration of the coating solution. Especially for causing the surface layer to be precipitated into the pores of the substrate layer, the surface layer to be precipitated can also be a pore-less film without pores as long as the most constricted portions of the precipitated pores are 3 nm or less nm, that is, the apparent average pore size being 3 nm or less.

As described above, in the method of the present invention, a ceramic porous membrane with fine pores can be obtained by simple operation of coating a porous substrate layer with a coating solution, drying and sintering without any complicated post-treatment.

The ceramic porous membrane obtained according to the method of the present invention can be used to separate a gas mixture or liquid mixture in a high temperature and high pressure range.

The present invention can present a material which can adsorb 1 wt% or more, ideally 5 wt% or more of NOₓ in air of 0.03 ppm in NOₓ concentration, 1.5% in absolute humidity and 25° C in temperature.

Furthermore, the adsorbent can be used to design NOₓ adsorbing or removing apparatuses suitable for various purposes. A NOₓ adsorbing column packed with a granular or powdery NOₓ adsorbent or a hollow fiber membrane structure, flat membrane structure or honeycomb structure with said adsorbent laminated or applied on the surface of a substrate can be prepared for use as a NOₓ removal system for combustion exhaust gas.

As described above, according to the method of the present invention, a granular, powdery, filmy or honeycomb porous alumina NOₓ adsorbent can be obtained by simple operation of drying and sintering an alkoxide solution applied on a substrate without any complicated treatment.

The material of the present invention can be used to form any the above mentioned structures for use as a NOₓ removal apparatus for combustion exhaust gas. Features of a NOₓ removal apparatus using hollow fiber membranes as modules are described below.

The NOₓ removing membrane is high in heat resistance and oxidation resistance since it is made of an inorganic compound.

The porous inorganic compound to constitute the surface layer of the NOₓ removing membrane has a peculiar pore size distribution and pore volume, and also fine pore sizes of 1 nm or less enough to cause the micropore filling of water vapor at high temperatures higher than the critical temperature of water. The pore sizes of 1 nm or less are surmised to cause not only the micropore filling of water vapor but also NOₓ adsorption.

In a hollow yarn membrane structure with an inorganic compound with said pore sizes as the surface layer, if a NOₓ containing gas comes to the surface layer, adsorption starts. If there is a pressure difference between the obverse side and the reverse side of the membrane, the gas permeates from the side high in pressure to the side low in pressure. Usually since the combustion exhaust gas pressure is higher than atmospheric pressure, NOₓ permeates the membrane from one side to the other side.

After permeating the membrane, the nitrogen oxides can be reduced by using hydrogen, ammonia gas, carbon monoxide gas or hydrocarbon gas, and since they are liable to be affected by a coexisting gas, the NOₓ removal rate can be further enhanced by using a catalyst together. Here is described the outline of a removal system using the most general ammonia selective reduction method.

The catalytic reduction by ammonia gas is said to be far more liable to occur compared to the reaction between coexisting sulfur oxides or oxygen and the reducing agent in a certain temperature range. In this system, the exhaust gas is heated to about 350° C by a burner, and a predetermined amount of ammonia is added and sufficiently mixed with the exhaust gas by a mixer for uniformizing the temperature and concentration, the mixture being introduced into a NOₓ removing column. In the NOₓ removing column, a honeycomb with vanadium oxide catalyst carried by titania carrier is placed. In this case, a reaction of 6NOₓ + 4xNH3 = (3 + 2x)N2 + 6xH2O occurs. If a precious metal catalyst of platinum or palladium is used in addition to vanadium oxide, said reaction selectively occurs at 210 to 310° C, and even if a space velocity (SV) of hundreds of thousands of h-1 or more is taken, a NOₓ removal efficiency of 90% or more can be achieved. Since a precious metal catalyst is expensive and short in life, the ammonia reduction method using a base metal catalyst of copper, iron or chromium, etc. may also be practical for treatment of combustion exhaust gas.

As described above, according to the method of the present invention, a ceramic porous membrane with fine pores can be obtained by simple operation of coating a porous substrate with a coating solution, drying and sintering. Furthermore, the ceramic porous membrane obtained according to the method of the present invention can be used to allow stable NOₓ separation in a high temperature range for a long period of time.

### (Evaluation methods)

As a NOₓ permeation test method, a membrane sample coated with porous alumina is once heated to 600° C in nitrogen gas, to perfectly remove the originally adsorbed materials. After the adsorbed materials have been removed for a sufficient time, the system is plugged and cooled to room temperature. For the treatment conditions in this case, dry helium gas is allowed to flow for more than 12 hours, and at a helium flow rate of 50 cc/min, the temperature is raised at a rate of 10° C/min up to 600° C, and held at the level for 30 minutes, being lowered to room temperature at a rate of 10° C/min.

The membrane sample degassed beforehand as described above is placed in a NOₓ containing gas current and held at a certain high temperature, and then NOₓ is caused to permeate. In this case, nitrogen gas containing several parts per million to thousands of parts per million of nitrogen monoxide (NO) or nitrogen dioxide (NO2) is caused to flow at an SV value of 1000 h-h to 100000 h-1, to observe the NOₓ concentrations upstream and downstream of the membrane sample. The use of a gas containing water vapor or oxygen as well as nitrogen gas allows more practical evaluation.

For efficient NOₓ permeation, a temperature range from 200 to 500° C is recommended. If the temperature is lower than 200° C, mainly water vapor is liable to be adsorbed and permeate, not allowing efficient permeation of NOₓ. If higher than 500° C, NOₓ is liable to be desorbed, making NOₓ permeation difficult.

The NOₓ concentrated after permeation is decomposed by a reducing gas into nitrogen. It is recommended to use the most generally used ammonia gas high in NOₓ removal rate as the reducing gas for evaluation. Ammonia gas used with a precious metal catalyst of platinum or palladium, etc. at 200 to 300° C allows efficient NOₓ removal. A vanadium-carrying titanium oxide catalyst can also be used.

The NOₓ adsorbent obtained according to the present invention can be used to separate a gas or liquid in a high temperature and high pressure range stably for a long period of time.

The pore sizes of the inorganic membrane structure obtained can be evaluated by a gas adsorption method or differential scanning calorimetry.

In the case of gas adsorption method, the sample gets the contained water and NOₓ sufficiently desorbed beforehand, and for measuring mesopores of 2 nm or more, the sample is caused to adsorb nitrogen gas for obtaining the pore sizes by the Dollimore-Heal method. For measuring micropores of 2 nm or less, the sample is caused to adsorb argon gas for obtaining the pore size distribution and pore volume by the Horvath-Kawazoe method.

In the case of differential scanning calorimetry, the sample is immersed in pure water, and allowed to stand under reduced pressure by an aspirator for one night or longer time, to sufficiently fill the pores with water, and enclosed in a sealed sample vessel.

Using the above gas adsorption method or differential scanning calorimetry, the average pore diameter = 4V/S is obtained from the cumulative pore volume (volume B) and the surface area of pores (S). The average pore diameter in the present invention refers to an average area diameter.

The crystal structure of the NOₓ adsorbent can be determined by the X-ray diffraction method or electron diffraction method. In the case of a filmy sample, the X-ray diffraction method is used to let X-rays passing through a slit with the X-ray source as the linear focal point fall on the surface of the sample at a very small incident angle of 1 to 10 degrees, for intensifying the strength of diffraction from the membrane sample.

In the X-ray diffraction method, if the diffraction peak is so broad as to look amorphous, making it difficult to identify crystallization, the following electron diffraction is used for determining whether the structure is amorphous or highly crystalline with very fine grains.

In the electron diffraction method, in the case of a filmy sample, it is cut across as an about 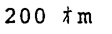
film, and it is mechanically ground into an about 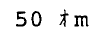
thick film. It is further thinned to about 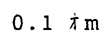
by an ion milling device using argon ions, and observed by a transmission electron microscope. In the case of a powdery sample, it can be observed by a transmission electron microscope after ion milling or as it is. The focus is placed on the region to be evaluated of the crystalline state, and an area selecting stop with a proper aperture size is inserted. Then, the electron diffraction image is obtained in the selected area electron diffraction mode. In the case of electron diffraction, a crystalline structure shows clear diffraction spots or diffraction rings, and an amorphous structure does not show any spots or rings and gives a halo pattern. That is, atomic scattering corresponding to statistical inter-atom distances based on amorphous disordered atomic arrangement interacts to be intensified to give a halo pattern peculiar to an amorphous structure, which is very broad but has an intensity distribution, attenuating toward the higher angle side. This is referred to for identification as an amorphous structure.

The above two methods are used for structural analysis, and the structure which does not give a diffraction peak in the X-ray diffraction method and does not give any diffraction lines in the electron diffraction method is determined to be amorphous.

### (Embodiments of apparatus)

The NOₓ removal apparatus using the selective adsorbable material of the present invention is not especially limited. As embodiments, the material of the present invention can be formed as a honeycomb, hollow fiber membrane or flat membrane, or a substrate formed like a honeycomb, hollow fiber or flat film can be coated with the material of the present invention, and NOₓ containing gas is allowed to flow onto the outside surface or inside surface of such a product, for letting NOₓ gas selectively permeate to the other side. As required, a reducing catalyst can be provided on the other side, for reducing and decomposing NOₓ.

The material of the present invention formed as grains, powder, hollow fiber membrane or honeycomb, or a composite material obtained by coating a substrate with the material of the present invention can also be used to make at least two apparatuses which respectively allow
(1) a gas mixture containing combustion exhaust gas to be fed for adsorption of said combustion exhaust gas, and
(2) the adsorbed gas to be desorbed,
and are operated periodically alternately to execute either of the above two actions, as an exhaust gas treatment system for a tunnel, etc.

A NOₓ separator using the selective adsorbable material of the present invention is described below specifically with reference to a drawing.

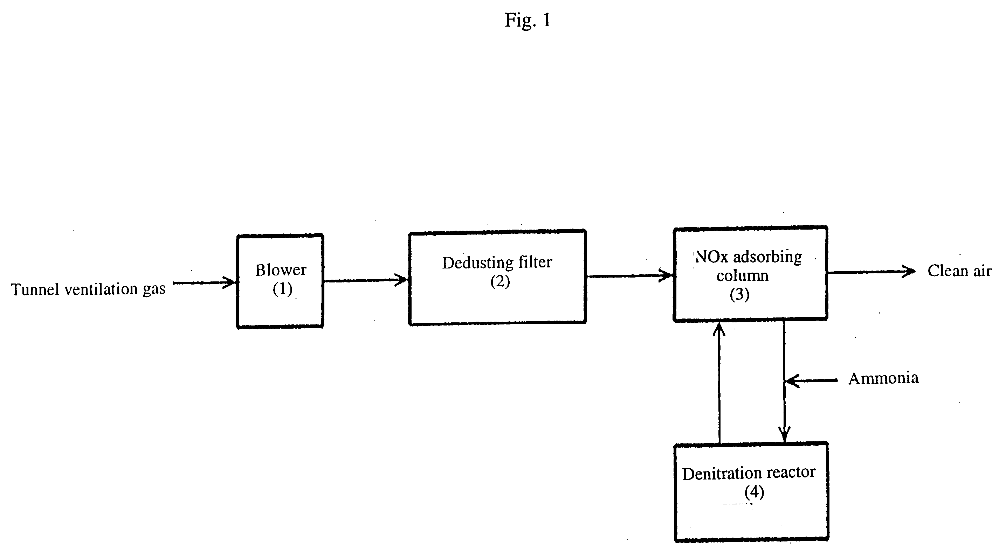

The present invention can present an ideal adsorbent for efficiently removing low concentration NOₓ in systems for cleaning the exhaust gas generated in various tunnels, underground parking areas, street canyons, etc. A tunnel denitration system using this adsorbent is described below in reference to the flow chart shown in Fig. 1.

Tunnel ventilation gas is sent by a blower (1) through a dedusting filter (2), to remove mainly solid harmful materials contained in the exhaust gas, and an adsorbing column (3) adsorbs and removes NOₓ as low as several parts per million in concentration contained in the exhaust gas using an adsorbent till the gas is cooled to room temperature. The residue is discharged as clean air. The adsorbent is periodically regenerated by a heating air circulation system, and the desorbed NOₓ is decomposed by a denitration reactor (4) using ammonia into harmless nitrogen and water. The NOₓ not decomposed by the denitration reactor (4) is returned into the adsorbing column (3), to be recovered.

If the adsorbing column (3) has a standby column(s) (or is split into two or more divisions), one can be used for adsorption while the other is regenerated, for periodical exchange of both the actions, to allow continuous NOₓ removal treatment by the system as a whole.

It is known that if NOₓ is large in NO content, it is generally less liable to be adsorbed. So, if an oxidizing catalyst is used or NOₓ is oxidized by ozone into NO2 before the exhaust gas is introduced into the adsorbing column, the effect can be further enhanced. Furthermore, since the water vapor contained in the exhaust gas inhibits the adsorption of NOₓ, dehumidification before introduction into the adsorbing column can further enhance the effect.

The method for incorporating the adsorbent into the above system is described below. A NOₓ adsorbing column generally adopts a honeycomb structure internally, and coating a honeycomb carrier with the alumina powder of the present invention using an inorganic adhesive is a simple and convenient method. As another simple and convenient method, a honeycomb substrate can be immersed into an alkoxide solution adjusted at a moderate viscosity beforehand, dried and sintered, to have an alumina NOₓ adsorbing layer formed on the surface of the substrate. In this case, since the adhesive is not required, the adsorption effect is expected to be higher.

The present invention is described below in more detail in reference to examples.

### Example 1

Aluminum isopropoxide (Al(OC₃H₇)₃) and diethanolamine (NH(C₂H₄OH)₂) were weighed and mixed at a molar ratio of 1 : 0.5 (= the former : the latter) in pure nitrogen gas atmosphere for perfect dissolution, and ethyl alcohol was used to prepare a solution of 0.5 mole/liter in concentration.

The prepared aluminum isopropoxide solution was put into a Petri dish and allowed to stand in air adjusted at relative humidity of 80% for 24 hours. Subsequently, the water contained in the air caused hydrolysis, and the gelation was completed. The gel was dried in a dryer set at 60° C till the water vanished apparently, and sintered in air at 600° C for 30 minutes.

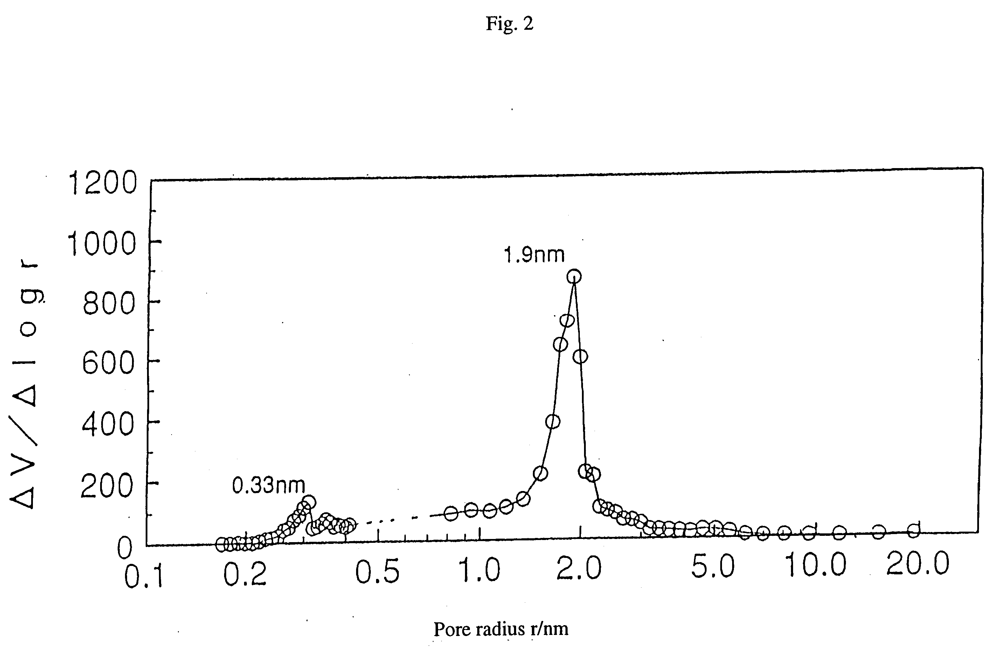

The pore sizes of the inorganic membrane structure obtained were evaluated by the gas adsorption method. The membrane structure was desorbed at 300° C under reduced pressure, and caused to adsorb nitrogen gas, and the pore sizes were obtained by the D-H method. Furthermore, it was caused to adsorb argon gas, and the pore sizes were obtained by the H-K method, and the result is shown in Fig. 2. In this case, the average pore diameter was 3.6 nm, and there were two pore diameter peaks of 0.66 (sub-peak) and 3.8 nm (main peak) (Fig. 2 show pore radii). The total pore volume was 0.136 cc/g.

The crystal structure of the NOₓ adsorbent produced by the above method was identified. At first, powder X-ray diffraction test was effected using a Cukα tube. Continuous scanning was effected at a supply voltage of 40 kV at a current of 20 mA at a scanning speed of 2° /min.

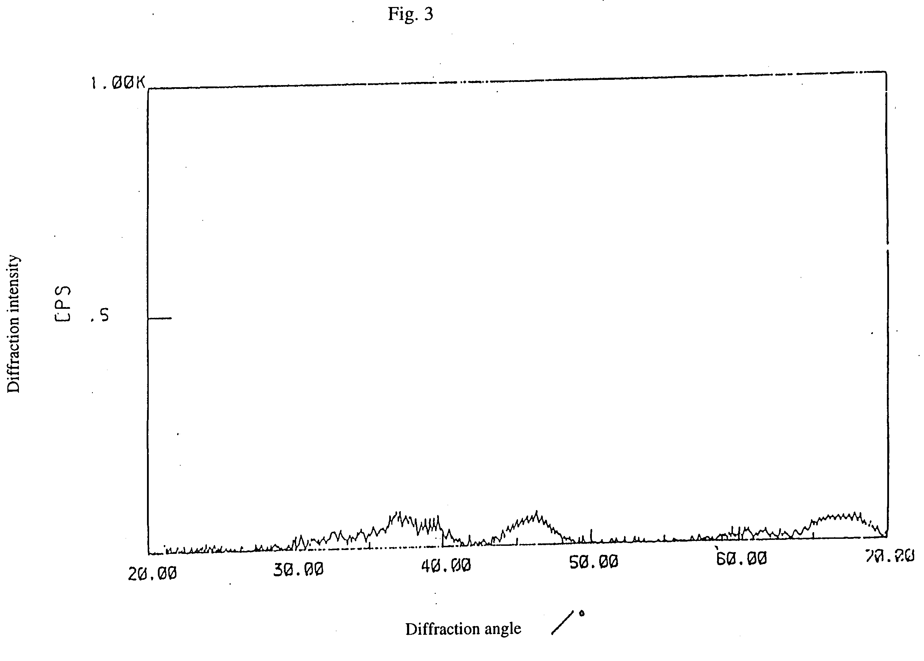

Fig. 3 shows the result of X-ray diffraction test in a range from 20 to 70 degrees. A low and broad undulation can be seen, which shows an amporphous structure without any specific peak. Furthermore, the sample was thinned to 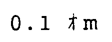
by an ion milling device using argon ions, and observed by a transmission electron microscope, and selected area electron diffraction of it shows a halo pattern peculiar to the amorphous structure.

The sintered sample was allowed to stand in air of 1.5% in absolute humidity and 25° C in temperature for 72 hours, as a test for adsorbing NOₓ (about 0.03 ppm) in air.

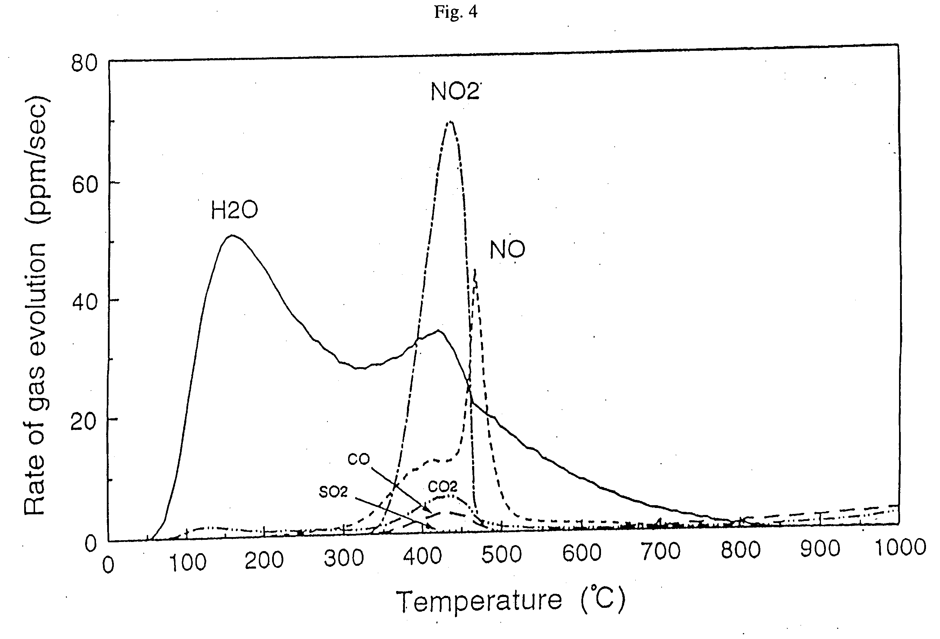

The adsorbent with NOₓ adsorbed by the above method was analyzed by thermogravimetry and mass spectrometry in a temperature range from 25° C to 1000° C. The result is shown in Fig. 4. The generation of water was observed in a temperature range from 50 to 800° C, and peaks were observed at about 150° C and 400° C. Especially with the dehydration peak at 400° C, the NOₓ (x = 1, 2) gas generation peak became very large. The amount of water adsorbed and the amount of NOₓ adsorbed reached 10% and 5% respectively of the change in total weight.

The NOₓ adsorbent obtained by the above method was heated at 600° C for 30 minutes, and cooled in air to 25° C, and its pore size distribution was measured and found to be the same as above.

This shows that the pore structure was sustained without any change. Compared to the NOₓ desorption curve, it is highly possible that NOₓ or water molecules were adsorbed during cooling in air, and without such a phenomenon, the peak smaller in pore size in the pore size distribution is estimated to have been larger.

### Example 2

Aluminum ethoxide (Al(OC₂H5)₃) and diethanolamine (NH(C₂H₄ OH)₂) were weighed and mixed at a molar ratio of 1 : 0.2 (= the former : the latter) in pure nitrogen gas atmosphere for perfect dissolution, and ethyl alcohol was used to prepare a solution of 1.0 mole/liter in concentration.

The prepared aluminum ethoxide solution was put into a Petri dish and allowed to stand in air adjusted to a relative humidity of 60% for 48 hours. Subsequently, the water contained in the air caused hydrolysis, and the gelation was completed. The gel was dried in a dryer set at 60° C till the water vanished apparently, and sintered in air at 550° C for 30 minutes.

The sintered sample was allowed to stand in air of 1.5% in absolute humidity and 25° C in temperature for 100 hours.

Then, it was allowed to stand in air of 1.5% in absolute humidity and 25° C in temperature for 72 hours, and analyzed by thermogravimetry and mass spectrometry in a temperature range from 25° C to 1000° C. As a result, the amount of water adsorbed and the amount of NOₓ adsorbed were 8% and 5% respectively of the change in total weight.

### Example 3

### (Sample preparation method)

Aluminum isopropoxide (Al(OC₃H₇)₃) and diethanolamine (NH(C₂H₄OH)₂) were weighed and mixed at a molar ratio of 1 : 0.5 (= the former : the latter) in pure nitrogen gas atmosphere for perfect dissolution, and ethyl alcohol was used to prepare a solution of 1.0 mole/liter in concentration.

The prepared aluminum ethoxide solution was put into a Petri dish and allowed to stand in air adjusted to a relative humidity of 60% for 48 hours. Subsequently, the water contained in the air caused hydrolysis, and the gelation was completed. The gel was dried in a dryer set at 60° till the water vanished apparently, and sintered in air at 550° C for 30 minutes.

### (Evaluation method)

The pore sizes of the inorganic membrane structure obtained were evaluated according to the gas adsorption method. It was caused to adsorb nitrogen gas, to obtain pore sizes according to the D-H method, and was caused to adsorb argon gas, to obtain pore sizes according to the H-K method. In this case, the average pore size was 3.2 nm, and there were two peaks of pore sizes at 0.58 nm and 3.4 nm. The total pore volume was 0.138 cc/g.

Furthermore, the crystal structure of the NOₓ adsorbent was identified. At first, powder X-ray diffraction test was effected using a Cukα tube. Continuous scanning was effected at a supply voltage of 40 kV at a current of 20 mA at a scanning speed of 2° /min. As a result, an amorphous structure without any specific peak in a range from 20 to 70 degrees was identified. Furthermore, the sample was thinned to 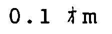
by an ion milling device using argon ions, and observed by a transmission electron microscope, and selected area electron diffraction gave a peculiar halo pattern, to show that the adsorbent was amorphous.

This alumina was packed into a sample cell and once heated to 550° C in nitrogen gas, and kept at the temperature for 12 hours, for the purpose of perfectly removing the materials adsorbed in it. After the adsorbed materials had been removed, the cell was plugged and cooled to room temperature. After completion of cooling, it was allowed to stand in air for 100 days, to naturally adsorb the NOₓ in air. The sample with NOₓ adsorbed was analyzed by a thermogravimeter-mass spectrometer to find the change of weight and the gas generated from the sample when heated, for identifying the adsorbed materials. As a result of analysis by thermogravimetry and mass spectrometry in a temperature range from 25° C to 1000° C, the amount of water adsorbed was 9.5% based on the weight of the sample, that of NO, 1.8%, and that of NO₂, 2.9%.

A NOₓ adsorbent prepared as done above was allowed to stand in helium balance gas current containing 200 ppm of NO and flowing at a flow velocity of 150 cc/min, being forced to adsorb NO. Furthermore, the same NOₓ adsorbent as above was allowed to stand in helium balance gas current containing 200 ppm of NO₂ and flowing at a flow velocity of 150 cc/min for 12 hours, being forced to adsorb NO₂. The changes in weight were observed with the lapse of time, and in both the cases of NO and NO₂, the weights reached almost more than 90% of the saturated weight 40 minutes later.

### (Evaluation method)

The samples with NO and NO₂ adsorbed were analyzed by a thermogravimeter-mass spectrometer to identify the adsorbed materials. As a result, the amount of NO adsorbed was found to be 6% at the maximum, and the amount of NO₂ adsorbed, 9%.

### Example 4

### (Sample preparation method)

Aluminum isopropoxide (Al(OC₃H₇)₃) and diethanolamine (NH(C₂H₄OH)₂) were weighed and mixed at a molar ratio of 1 : 2 (= the former : the latter) in pure nitrogen gas atmosphere for perfect dissolution, and ethyl alcohol was used to prepare a solution of 1.0 mole/liter in concentration. It was hydrolyzed, dried and sintered as done in Example 1, and was heated to remove the adsorbed materials, and as done in Example 3, it was forced to adsorb NO and NO₂.

### (Evaluation method)

The NOₓ adsorbent obtained according to the above method was forced to adsorb NO and NO₂ as done in Example 3, and the adsorbed materials were identified by a thermogravimeter-mass spectrometer. As a result, the amount of NO adsorbed was found to be 7% at the maximum, and the amount of NO₂ adsorbed, 12%.

### Example 5

### (Sample preparation method)

Aluminum isopropoxide (Al(OC₃H₇)₃) and diethanolamine (NH(C₂H₄OH)₂) were weighed and mixed at a molar ratio of 1 : 0.5 (= the former : the latter) in pure nitrogen gas atmosphere for perfect dissolution, and ethyl alcohol was used to prepare a solution of 1.0 mole/liter in concentration. To it, 3 moles of water was added, and the mixture was stirred for 5 hours, to cause hydrolysis and to complete gelation. The gel was dried in a dryer set at 60° C till the water vanished apparently, and sintered in air at 600° C for 30 minutes.

The sample was heated as done in Example 1, to remove the adsorbed materials, and was allowed to stand in helium balance gas current containing 200 ppm of NO and flowing at a flow velocity of 150 cc/min for 12 hours, to be forced to adsorb NO. Similarly, the same sample as above was allowed to stand in helium balance gas current containing 200 ppm of NO₂ and flowing at a flow velocity of 150 cc/min for 12 hours, to be forced to adsorb NO₂. With the lapse of time, the changes in weight were observed, and in both the cases of NO and NO₂, the weights reached almost more than 90% of the saturated weight 20 minutes later.

### (Evaluation method)

The NOₓ adsorbent obtained as done above was forced to adsorb NO and NO₂ as done in Example 3, and the adsorbed materials were identified by a thermogravimeter-mass spectrometer. As a result, the amount of NO adsorbed was found to be 12% at the maximum, and the amount of NO₂ adsorbed, 18%.

### Example 6

### (Sample preparation method)

In dry nitrogen atmosphere, aluminum isopropoxide and diethanolamine were mixed at a molar ratio of 1 : 2 (= the former : the latter) at about 50° C. To the solution, ethanol was added for dilution to keep the aluminum isopropoxide concentration at 0.2 mole with the total amount as one liter, to prepare a transparent coating solution.

An alumina porous hollow tube of 50 nm in the average pore diameter of its surface portion, and of 5 mm in diameter, 1 mm in thickness and 100 mm in length was pre-arranged, immersed into said coating solution for 2 minutes, slowly raised at a rate of 10 cm per minute, dried in air at 60° C, and sintered at 650° C for 30 minutes. This operation was repeated 4 times, to obtain a porous membrane with a surface layer laminated on the substrate layer.

### (Evaluation method)

The pore sizes of the porous membrane surface layer were measured by the gas adsorption method, and the average pore diameter was found to be 2.9 nm. The outermost surface layer was found to have an amorphous structure.

The sample was allowed to stand in air for 100 days, to naturally adsorb the NOₓ in air as done in Example 1. The sample with NOₓ adsorbed was heated in helium gas current, and the generated gas was analyzed by using a NOₓ gas detecting tube and a trace NOₓ meter, to identify the adsorbed materials. As a result, in a temperature range from 200 to 500° C, NO and NO₂ were detected.

### Example 7

### (Sample preparation method)

In dry nitrogen atmosphere, aluminum isopropoxide and diethanolamine were mixed at a molar ratio of 1 : 2 (= the former : the latter) at about 80° C, and ethanol was added for dilution to keep the aluminum isopropoxide concentration at 0.5 mole with the total amount as one liter, to prepare a transparent coating solution.

An alumna porous hollow tube of 8 nm in the average pore diameter of the outermost surface portion, and of 5 mm in diameter, 1 mm in thickness and 100 mm in length was prearranged, immersed in said coating solution for 2 minutes, slowly raised at a rate of 10 cm per minute, dried in air at 60° C and sintered at 600° C for 30 minutes.

The porous membrane obtained had the surface layer precipitated into the substrate layer. As a result of differential scanning calorimetry, the average pore size was found to be about 2 nm. The outermost surface layer was found to have an amorphous structure.

### Example 8

### (Membrane preparation method)

Aluminum isopropoxide (Al(OC₃H₇)₃) and diethanolamine (NH(C₂H₄OH)₂) were weighed and mixed at a molar ratio of 1 : 0.5 (= the former : the latter) in pure nitrogen gas atmosphere for perfect dissolution, and ethyl alcohol was used to prepare a solution of 1.0 mole/liter in concentration.

A tubular silica porous membrane of 8.5 nm in average pore size, 6.5 mm in outer diameter and 5 mm in inner diameter was coated on the surface with the aluminum isopropoxide solution prepared, and allowed to stand in air adjusted to a relative humidity of 60%. Subsequently the water in the air caused the alkoxide to be hydrolyzed, and the gelation was completed. The gel was dried in a dryer set at 60° C till the water vanished apparently, and sintered in air at 650° C for 30 minutes. This coating operation was repeated 4 times.

### (Evaluation method)

A powder sample prepared under the same conditions as above was analyzed by the gas adsorption method, to identify the pore size distribution and the crystal structure. As a result, the average pore peak diameter was found to be 1.5 nm, and the pore volume, 0.21 cc/g. Furthermore, the crystal structure of the NOₓ adsorbent was identified. At first, in the X-ray diffraction method, an amorphous structure without any specific peak in a range from 20 to 70 degrees was found. Furthermore, electron diffraction was effected, and since a peculiar halo pattern could be obtained, the structure was judged to be amorphous.

Said sintered membrane sample was tested as to NOₓ selective permeation.

Four hundred parts per million of NO₂ was added to N₂ balance gas containing 15% of water vapor, and the mixed gas was supplied to the membrane sample at a flow rate of 400 cc/min. At 100° C, 600 ppm of NO₂ was detected at permeated side outlet, and 100 ppm of NO₂, at unpermeated side outlet. Furthermore, at 300° C, 8000 ppm of NO₂ was detected at permeated side outlet, and 5 ppm, at unpermeated side outlet. From this test, the membrane sample of the present invention was found to allow the selective permeation of NOₓ.

Said sintered membrane sample was degassed at 600° C, and held at 400° C, to allow the permeation of NO and NO₂. Nitrogen gas containing 10 ppm each of NO and NO₂ was fed, and the NOₓ concentrations on the outlet (unpermeated side) were observed. As a result, NO was detected by 2 ppm, but no NO₂ was detected.

On the permeated side, ammonia gas was blown in at a rate of 100 cc/min, for reduction in the presence of a titania catalyst with V₂O₅ carried, and the gas fed through the catalyst did not allow either NO or NO₂ to be detected.

### Example 9

Aluminum isopropoxide and diethanolamine were mixed at a molar ratio of 1 : 2 (= the former : the latter) at about 50° C in dry nitrogen atmosphere. To the solution, ethanol was added for dilution to keep the aluminum isopropoxide concentration at 0.2 mole with the total amount as one liter, to prepare a transparent coating solution.

Proper amounts of caking additives (cellulose, etc.) and water were added to marketed a-alumina powder (0.4 µm in grain size), and the mixture was kneaded, molded by an extrusion molding machine into a hollow tube of 5 to 10 mm in outer diameter, 3.5 to 7 mm in inner diameter and 300 mm in length, dried, and sintered, to prepare an alumina porous hollow tube of 50 nm in the average pore diameter of the surface portion, and of 5 mm in diameter, 1 mm in thickness and 100 mm in length. It was immersed into said coating solution for 2 minutes, slowly raised at a rate of 10 cm per minute, dried in air at 60° C and sintered at 650° C for 30 minutes. This operation was repeated 4 times, to obtain a porous membrane with a surface layer laminated on the substrate layer. The pore sizes of the surface layer of the porous membrane were measured by the gas adsorption method. The average grain diameter was found to be about 3 nm, and the outermost surface layer was found to have an amorphous structure.

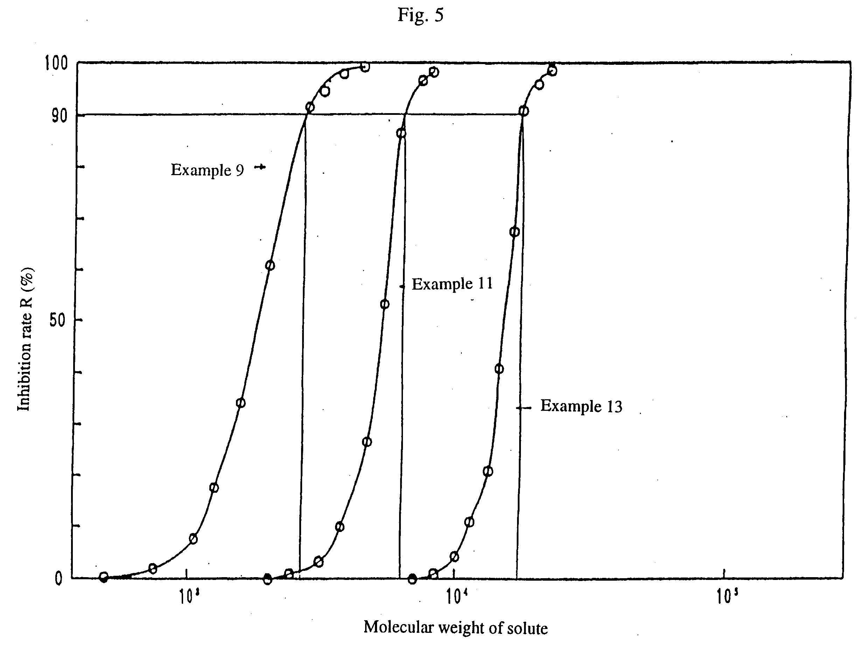

The ceramic porous membrane was used to separate a mixed gas consisting of equal volumes of nitrogen and water vapor at a measurement temperature of 50° C and an operation pressure of 1.5 atm, and the separation factor of water vapor was found to be 1130. The molecular weight fraction curve of the solute is shown in Fig. 5.

### Example 10

In dry nitrogen atmosphere, aluminum isopropoxide and acetylacetone were mixed at a molar ratio of 1 : 0.5 (= the former : the latter), and to the solution, isopropanol was added for dilution to keep the aluminum isopropoxide concentration at 0.1 mole with the total amount as one liter, to prepare a transparent coating solution. The same porous hollow tube as used in Example 1 was used to obtain a porous membrane as done in Example 1.

The pore sizes of the porous membrane were measured by the gas adsorption method, and the average pore diameter was found to be 1.4 nm. The surface layer was found to have an amorphous structure.

The ceramic porous membrane was used to separate a mixed gas consisting of equal volumes of nitrogen and water vapor at a measurement temperature of 50° C and an operation pressure of 1.5 atm, and the separation factor was found to be 3380.

### Example 11

In dry nitrogen atmosphere, aluminum isopropoxide and diethanolamine were mixed at a molar ratio of 1 : 2 (= the former : the latter) at about 80° C, and to the solution, ethanol was added for dilution to keep the aluminum isopropoxide concentration at 0.5 mole with the total amount as one liter, to prepare a transparent coating solution.

An alumina porous hollow tube of 80 nm in the average pore diameter of the surface portion, and of 5 mm in diameter, 1 mm in thickness and 100 mm in length was pre-arranged, immersed into said coating solution for 2 minutes, slowly raised at a rate of 10 cm per minute, dried in air at 60° C, and sintered at 600° C for 30 minutes.

The porous membrane obtained had its surface layer precipitated in the substrate layer, and as a result of differential scanning calorimetry, the average pore size was found to be about 2 nm. The outermost surface layer was found to have an amorphous structure.

The ceramic porous membrane was used to separate a mixed gas consisting of equal volumes of nitrogen and water vapor at a measurement temperature of 50° C and an operation pressure of 1.5 atm, and the separation factor of water vapor was found to be 2170.

The molecular weight fraction curve of the solute is shown in Fig. 5.

### Example 12

In dry nitrogen atmosphere, zirconium tributoxide and acetylacetone were mixed at a molar ratio of 1 : 1 (= the former : the latter), and to the solution, isopropanol was added for dilution to keep the zirconium tributoxide concentration at 0.1 mole with the total amount as one liter, to prepare a transparent coating solution. Then, as done in Example 1, a porous membrane was obtained.

The pore sizes of the porous membrane obtained were measured by the gas adsorption method, and the average pore diameter was found to be about 1 nm. The outermost surface layer was found to have an amorphous structure.

The ceramic porous membrane was used to separate a mixed gas consisting of equal volumes of nitrogen and water vapor at a measurement temperature of 50° C and an operation pressure of 1.5 atom, and the separation factor of water vapor was found to be 6520.

### Example 13

In dry nitrogen atmosphere, titanium tetraisopropoxide and diethylene glycol were mixed at a molar ratio of 1 : 0.1 (= the former : the latter), and to the solution, isopropanol was added for dilution to keep the titanium tetraisopropoxide concentration at 0.1 mole with the total amount as one liter, to prepare a transparent coating solution.

An alumina porous hollow tube of 100 nm in average pore diameter, 5 mm in diameter, 1 mm in thickness and 100 mm in length was pre-arranged, immersed into said coating solution for 2 minutes, slowly raised at a rate of 10 cm per minute, dried in air at 60° C and sintered at 650° C for 30 minutes. This operation was repeated 4 times, to obtain a final porous membrane. The pore sizes of the porous membrane obtained were measured by the gas adsorption method, and the average pore diameter was found to be about 2.5 nm. The outermost surface layer was found to have an amorphous structure.

The ceramic porous membrane was used to separate a mixed gas consisting of equal volumes of nitrogen and water vapor at a measurement temperature of 50° C and an operation pressure of 1.5 atm, and the separation factor of water vapor was found to be 1750. The molecular weight fraction curve of the solute is shown in Fig. 5.

### Example 14

In dry nitrogen atmosphere, aluminum isopropoxide and diethanolamine were mixed at a molar ratio of 1 : 2 (= the former : the latter) at about 80° C, and to the solution, ethanol was added for dilution to keep the aluminum isopropoxide concentration at 0.2 mole with the total amount as one liter. Furthermore, water was added to prepare a fine alumina sol solution.

An alumina porous hollow tube of 50 nm in the average pore diameter of the surface portion, 5 mm in diameter, 1 mm in thickness and 100 mm in length was pre-arranged, immersed into said coating solution for 2 minutes, slowly raised at a rate of 10 cm per minute, dried in air at 60° C, and sintered at 600° C for 30 minutes. This operation was repeated 4 times, to obtain a porous membrane with a surface layer laminated on the substrate layer. The pore sizes of the surface layer of the porous membrane were measured by the gas adsorption method, and the average pore diameter was found to be about 2.8 nm. The outermost surface layer was found to have g-alumina structure.

The ceramic porous membrane was used to separate a mixed gas consisting of equal volumes of nitrogen and water vapor at a measurement temperature of 50° C and an operation pressure of 1.5 atm, and the separation factor of water vapor was found to be 250.

### Comparative example 1

In dry nitrogen atmosphere, ethanol was added to keep the aluminum isopropoxide concentration at 0.5 mole with the total amount as 1 mole, and the mixture was mixed at 70° C, to prepare a coating solution. In this case, the water contained in ethanol hydrolyzed aluminum isopropoxide, to precipitate hydroxide grains, thereby making the coating solution turbid.

An alumina porous hollow tube of 0.05 µm in average pore diameter, 5 mm in diameter, 1 mm in thickness and 100 mm in length was pre-arranged, immersed into said coating solution for 2 minutes, slowly raised at a rate of 10 cm per minute, dried in air at 60° C, and sintered at 600° C for 30 minutes. This operation was repeated 4 times, to obtain a final porous membrane. The pore sizes of the porous membrane obtained were measured by the gas adsorption method, and the average pore diameter was found to be about 12 nm.

### Comparative example 2

In dry nitrogen atmosphere, isopropanol was added to keep the zirconium tributoxide concentration at 0.1 mole with the total amount as one liter, and the mixture was mixed, to prepare a coating solution. In this case, as in Comparative Example 1, the water contained in isopropanol hydrolyzed zirconium tributoxide, to precipitate hydroxide grains, thereby making the coating solution turbid, not transparent.

An alumina porous hollow tube of 0.05 µm in average pore diameter, 5 mm in diameter, 1 mm in thickness and 100 mm in length was pre-arranged, immersed into said coating solution for 2 minutes, slowly raised at a rate of 10 cm per minute, dried in air at 60° C, and sintered at 600° C for 30 minutes. This operation was repeated 4 times, to obtain a final porous membrane. The pore sizes of the porous membrane obtained were measured according to the gas adsorption method, and the average pore diameter was found to be about 7.5 nm.

### Comparative example 3

In dry nitrogen atmosphere, isopropanol was added to keep the titanium tetraisopropoxide concentration at 0.1 mole with the total amount as one liter, and the mixture was mixed to prepare a coating solution. In this case, as in Comparative Example 1, the water contained in isopropanol hydrolyzed titanium tetraisopropoxide, to precipitate hydroxide grains, thereby making the coating solution turbid, not transparent.

An alumina porous hollow tube of 0.1 µm in average pore diameter, 5 mm in diameter, 1 mm in thickness and 100 mm in length was pre-arranged, immersed into said coating solution for 2 minutes, slowly raised at a rate of 10 cm per minute, dried in air at 60° C, and sintered at 650° C for 30 minutes. This operation was repeated 6 times, to obtain a final porous membrane. The pore sizes of the porous membrane obtained were measured by the gas adsorption method, and the average pore diameter was found to be about 11 nm.

### Industrial availability

The present invention can present an inorganic membrane structure with homogeneous and very finely controlled pores, which can be used for separating a gas mixture or a mixture of liquids different in molecular weight under severe conditions such as high temperature, high pressure and corrosive atmosphere.

Especially, the present invention presents a NOₓ adsorbent which can efficiently selectively adsorb low concentration NOₓ in combustion exhaust gas or mixed gas and can simply desorb it for reutilization, and furthermore can be presented in various forms such as packed column and hollow fiber membrane.

It is specially to be noted that the present invention can present a NOₓ adsorbable material which can adsorb 0.01 wt% or more, more preferably 0.1 wt% or more, further more preferably 1 wt% or more of NOₓ even in air of 0.03 ppm in NOₓ concentration, 1.5% in absolute humidity and 25° C in temperature. Said NOₓ adsorbable material little adsorbs SOₓ as can be seen from Fig. 4, being very high in selectivity. Furthermore, it is also excellent in water vapor selective permeability at high temperature, and can achieve a water vapor separation factor of 10 or more, more preferably 100 or more, further more preferably 1000 or more at 300° C.

## Claims

**1**. A porous material having selective adsorptivity of 5 nm or less in average pore size, selected from Al-, Ti-, Zr- and Si-based oxides.

**2.** A porous material having selective adsorptivity of claim 1, which has a pore peak size of 0.4 to 0.8 nm.

**3.** A porous material having selective adsorptivity of claim 1, which is at least 0.10 cc/g in pore volume.

**4.** A porous material having selective adsorptivity of claim 1, which is at least 0.25 cc/g in pore volume.

**5.** A porous material having selective adsorptivity of claim 1, which has a substantially amorphous structure.

**6.** A porous material having selective adsorptivity of claim 1, which is 0.5 to 5 nm in average pore size.

**7.** A porous material having selective adsorptivity of claim 1, which is selected from materials based on alumina, titania, zirconia, silica, mullite and cordierite.

**8.** A porous material having selective adsorptivity of claim 1, wherein said oxide is based on alumina.

**9.** A porous material having selective adsorptivity of claim 1, which is formed on an inorganic porous substrate.

**10.** A porous material having selective adsorptivity of claim 10, wherein the inorganic porous substrate is selected from alumina, titania, zirconia, silica, mullite and cordierite.

**11.** A porous material having selective adsorptivity of claim 10, wherein the inorganic porous substrate is 100 nm or less in average pore size.

**12.** A method for preparing a porous material having selective adsorptivity described in claim 1, comprising the step of sintering a homogeneous mixture of a metal alkoxide and a nitrogen containing compound as essential components.

**13.** A method for preparing a porous material having selective adsorptivity of claim 12, wherein the porous material having selective adsorptivity is a NOₓ adsorbable material.

**14.** A method for preparing a porous material having selective adsorptivity of claim 12, wherein said homogeneous mixture contains 0.1 to 2.0 nitrogen atoms per one metal atom.

**15.** A method for preparing a porous selective adsorbable material of claim 12, wherein the metal alkoxide has the following structure:
M(-OR₁)ₓ(-OH)_{y}
M stands for Al, Ti, Zr or Si.
x + y = 3 or 4, x > 1
R₁ stands for a substituted or an unsubstituted aliphatic or alicyclic group with 1 to 6 carbon atoms.

**16.** A method for preparing a porous material having selective adsorptivity of claim 12, wherein the metal alkoxide is aluminum alkoxide.

**17.** A method for preparing a porous material having selective adsorptivity of claim 12, wherein the nitrogen containing compound and/or hydrolysis inhibitor has the following structure:
NHₓ(-R₂-OH)_{y}
x + y = 3, y > 1
R₂ stands for a substituted or an unsubstituted aliphatic or alicyclic group with 1 to 6 carbon atoms.

**18.** A method for preparing a porous material having selective adsorptivity of claim 12, wherein the nitrogen containing compound and/or hydrolysis inhibitor is an ethanolamine.

**19.** A method for preparing a porous material having selective adsorptivity of claim 12, wherein said homogeneous mixture contains a hydrolysis inhibitor.

**20.** A method for preparing a porous material having selective adsorptivity of claim 12, wherein said homogeneous mixture is an aliphatic alcohol solution.

**21.** A material comprising that stated in Claim 1, for use in adsorption of an NOₓ (x = 1 ∼ 2).

**22.** A NOₓ adsorbable material of claim 21, which adsorbs 1 wt% or more of NOₓ in air of 0.03 ppm in NOₓ concentration, 1.5% in absolute humidity and 25° C in temperature.

**23.** A NOₓ adsorbing material of claim 21, which desorbs NOₓ when heated.

**24.** A NOₓ adsorbing material of claim 21, which can reversibly adsorb and desorb NOₓ.

**27.** A porous material having selective adsorptivity of claim 1, the form of which is at least one selected from a group consisting of grains, powder, hollow fiber membrane, flat membrane and honeycomb.

**28.** A gas treatment method, comprising the steps of feeding a gas mixture containing the gas to be separated onto the outer or inner surface of a hollow fiber membrane or flat membrane made of a material stated in claim 1, for letting the gas to be separated selectively permeate onto the other surface, and treating said separated gas.

**29.** A gas treatment method of claim 28, wherein the gas to be separated is NOₓ, and said treatment is reduction for removal.

**30.** A gas treatment method of claim 28, wherein a reducing catalyst is provided on said other surface.

**31.** A combustion exhaust gas treatment apparatus using a material comprising that stated in claim 1.

**32.** An air cleaner using a material comprising that stated in claim 1.

**33.** An exhaust gas treatment system for a tunnel, comprising two apparatus as stated in claim 32 respectively allowing
(1) a gas mixture containing combustion exhaust gas to be fed for adsorption of said combustion exhaust gas, and
(2) the adsorbed gas to be desorbed,
and operated periodically alternately to execute either of the above two actions.
